# EUROPÄISCHE PATENTSCHRIFT

(11) **EP 1 224 233 B1**
(45) Veröffentlichungstag und Bekanntmachung des Hinweises auf die Patenterteilung: **05.11.2003**
(21) Anmeldenummer: 00958423.6
(22) Anmeldetag: 11.08.2000
(51) Int. Cl.: C08G 18/42, C08G 18/10

(54) **VERFAHREN ZUR HERSTELLUNG VON ISOCYANATENDGRUPPEN ENTHALTENDEN PREPOLYMEREN MIT EINEM GERINGEM ANTEIL AN EINGESETZTEN AUSGANGSISOCYANATEN**
METHOD FOR PRODUCING PREPOLYMERS CONTAINING ISOCYANATE END GROUPS, INCORPORATING A SMALL PROPORTION OF BASE ISOCYANATES
PROCEDE DE FABRICATION DE PREPOLYMERES CONTENANT DES GROUPES TERMINAUX ISOCYANATE ET RENFERMANT UNE FRACTION MINIME D'ISOCYANATES DE DEPART

(30) Priorität: 23.08.1999 DE 19939840
(43) Veröffentlichungstag der Anmeldung: 24.07.2002
(73) Patentinhaber: Bayer Aktiengesellschaft, 51368 Leverkusen (DE)
(72) Erfinder: BARNES, James-Michael, 53547 Breitscheid (DE); SCHMIDT, Manfred, 41540 Dormagen (DE); WERSHOFEN, Stefan, 41065 Mönchengladbach (DE); HOFFMANN, Andreas, 50733 Köln (DE)
(86) Internationale Anmeldenummer: EP0007823
(87) Internationale Veröffentlichungsnummer: WO01014443

(56) Entgegenhaltungen:
- EP-A- 0 579 988
- DE-A- 19 601 410
- US-A- 4 543 405
- US-A- 4 568 717

## Beschreibung

Die Erfindung betrifft ein Verfahren zur Herstellung von Isocyanatendgruppen enthaltenden Prepolymeren aus Polyesterpolyolen und Polyisocyanaten, die einen sehr geringen Anteil an freien Ausgangsisocyanaten enthalten.

Isocyanatendgruppen enthaltende Prepolymere aus Hydroxygruppen aufweisenden Polyestern und Polyisocyanaten werden für die verschiedensten Zwecke großtechnisch hergestellt und verwendet, z.B. für die Herstellung von PU-Gießelastomeren.

Aus ökologischen Gründen ist es erstrebenswert, Isocyanatgruppen enthaltende Prepolymere herzustellen, die einen nur geringen Anteil an nicht umgesetzten Polyisocyanaten enthalten. Dies ist umso erstrebenswerter, da die Prepolymere oft bei erhöhten Temperaturen weiter zu den Endprodukten verarbeitet werden, wobei sich die nicht umgesetzten Ausgangsisocyanaten verflüchtigen können. Aufgrund der Toxizität der eingesetzten Polyisocyanate sind dann besondere Sicherheitsvorkehrungen bei der Verarbeitung der Prepolymere erforderlich, was zu Lasten der Wirtschaftlichkeit bei der Verarbeitung solcher Prepolymere zu den Endprodukten geht.

Nach dem Stand der Technik werden solche Prepolymere z.Z. dadurch hergestellt, dass die Prepolymere nach der Umsetzung des monomeren Ausgangsisocyanates mit dem Polyol von dem nicht umgesetzten Isocyanat durch Destillation im Vakuum befreit werden. Bei Einsatz von Polyesterprepolymeren verbleiben jedoch auch nach der Destillation noch relevante Mengen Isocyanat im Prepolymeren zurück.

Ziel der vorliegenden Erfindung ist es daher, Isocyanatendgruppen enthaltende Prepolymere herzustellen, die einen gegenüber dem Stand der Technik verringerten Gehalt an monomeren Ausgangsisocyanat aufweisen.

Überraschenderweise wurde nun gefunden, dass sich solche Prepolymere dadurch herstellen lassen, indem man die eingesetzten Polyesterpolyole vor ihrem Einsatz von freien niedermolekularen, hydroxylgruppenhaltigen Polyesterbausteinen, wie Diolen und Triolen, weitestgehend befreit und damit einen bestimmten Gehalt an niedermolekularen Bausteinen in den einzusetzenden Polyolen einstellt.

Gegenstand der vorliegenden Erfindung ist daher ein Verfahren zur Herstellung von Isocyanatendgruppen enthaltenden Prepolymeren, das dadurch gekennzeichnet ist, dass man Polyisocyanate im Überschuss mit mindestens zwei Hydroxygruppen aufweisenden Polyestem vom Molekulargewicht 400 bis 5000 umsetzt, wobei die eingesetzten Polyester einen Gehalt an den den Polyestern zugrundeliegenden Polyolen von ≤ 6 mol%, bevorzugt ≤ 3 mol% und besonders bevorzugt ≤ 1,5 mol%, bezogen auf die Molverteilung des Polyesters besitzen, und anschließend das Reaktionsgemisch einer Destillation, gegebenenfalls unter Zugabe eines Schleppmittels, unterwirft.

Bevorzugt werden in das erfindungsgemäße Verfahren Polyester eingesetzt, die rechnerisch 2 bis 4 Hydroxylgruppen besitzen und ein Molekulargewicht von 400 bis 5000, insbesondere 600 bis 2500, aufweisen und die einen Gehalt an den den Polyestern zugrundeliegenden Polyolen (Glykol-Bausteine) von ≤ 6 mol%, bevorzugt ≤ 3 mol% und besonders bevorzugt ≤ 1,5mol% besitzen.

Erfindungsgemäß werden die Polyisocyanate zu den Polyestern im Äquivalentverhältnis von mindestens 1.9:1 eingesetzt, bevorzugt 2:1 bis 20:1, besonders bevorzugt 2.2:1 bis 10:1.

Der erfindungsgemäße Gehalt an den den Polyestern zugrundeliegenden Polyolen kann nach dem Stand der Technik auf verschiedenen Wegen beispielsweise durch Kurzwegverdampfung oder Dünnschichtdestillation erreicht werden, wobei die Polyester nach der Destillation durch intensive Kühlung sehr schnell auf unter 140°C, bevorzugt unter 100°C und besonders bevorzugt unter 70°C abgeschreckt werden, um so eine Equilibrierung unter Entstehen von Monomerbausteinen zu verhindern. Entsprechende Verfahren sind in der EP 0579988 beschrieben.

Als Polyisocyanate können in das erfindungsgemäße Verfahren alle bekannten aliphatische, cycloaliphatische, araliphatische, aromatische und/oder heterocyclische Polyisocyanate eingesetzt werden, wie sie beispielsweise von W. Siefken in Justus Liebigs Annalen der Chemie, 562, Seiten 75 bis 136, beschrieben werden, mit der Einschränkung, dass die Polyisocyanate im Vakuum ohne Zersetzung destillierbar sein müssen. Besonders bevorzugt werden in der Regel die technisch leicht zugänglichen Polyisocyanate, wie das 2,4- und/oder 2,6-Toluylendiisocyanat (TDI) eingesetzt.

Als Polyester können in das erfindungsgemäße Verfahren die zuvor erwähnten mindestens zwei Hydroxygruppen aufweisende Polyester mit Molekulargewichten von 400 bis 5000 eingesetzt werden. Solche Hydroxygruppen aufweisende Polyester sind bekannt für die Herstellung von homogenen und von zellförmigen Polyurethanen und beispielsweise beschrieben in DE-A 28 32 253.

Insbesonders sind solche Polyester zu erwähnen, die sich aus handelsüblichen Diolen und/oder Triolen mit bevorzugt 2 bis 6 Kohlenstoffatomen, wie Ethylenglykol, Diethylenglykol, Propandiol, Butandiol oder Hexandiol, wobei die Kohlenstoffkette auch Sauerstoffbrücken, wie z.B im Diethylenglykol, enthalten kann, als Polyolkomponente und üblichen Dicarbonsäuren, bevorzugt Adipinsäure, oder deren technischen Mischungen mit Bernstein- und/oder Glutarsäure, als Polycarbonsäurekomponente aufbauen.

Die eingesetzten Polyester können entsprechend dem Stand der Technik modifiziert oder mit Zusätzen versehen werden, wie Weichmacher, Emulgatoren oder Katalysatoren.

Nach der Umsetzung der eingesetzten Polyisocyanate mit dem erfindungsgemäß einzusetzenden Polyester wird das Reaktionsgemisch gegebenenfalls unter Zugabe eines Schleppmittels destilliert.

Die Destillation wird dabei üblicherweise bei Temperaturen im Bereich von ca. 130° bis 220° durchgeführt, wobei die Drücke ca. 0.001 bar bis 1 bar betragen.

Als Schleppmittel können die für solche Zwecke bekannten Schleppmittel eingesetzt werden, beispielsweise Toluol.

Die günstigste Menge an einzusetzenden Schleppmittel kann leicht durch entsprechende Vorversuche bestimmt werden, sie beträgt üblicherweise 2 bis 5 Gew.-%, bezogen auf die Menge an Prepolymeren.

Die nach dem erfindungsgemäßen Verfahren hergestellten Isocyanatendgruppen enthaltenden Prepolymeren mit einem sehr geringen Gehalt an eingesetzten Ausgangsisocyanaten können in üblicher Weise nach dem Stand der Technik zur Herstellung von Polyurethankunststoffen (mit den entsprechenden polyolischen Aufbaukomponenten) weiterverarbeitet werden.

### Beispiele

### 1.1 Herstellung und Modifizierung der Polyester:

Bei den eingesetzten Polyestern handelte es sich in allen Fällen um solche, die nur aus Ethylenglykol und Adipinsäure aufgebaut waren. Sie wurden in der an sich bekannten Art dadurch hergestellt, dass die beiden Ausgangsstoffe unter einem Vakuum von bis zu 15 mbar auf ca. 200°C erhitzt wurden, wobei gleichzeitig das Reaktionswasser abgenommen wurde. Der Endpunkt der Veresterung war erreicht, wenn die Säurezahl des Reaktionsgemisches unter 1 gesunken war.

Nach der Veresterung wurden die Polyester zur Entfernung der niedermolekularen Anteile in einem Kurzwegverdampfer nochmals bei Temperaturen von 200°C und Drucken von <0,2 mbar von den niedermolekularen, flüchtigen Anteilen befreit. Durch diese Kurzzeitbehandlung wird weitestgehend ausgeschlossen, dass sich im Polyester Kurzketter durch Umesterungsreaktionen nachbilden. Die Polyester befinden sich also nicht mehr im statistischen Gleichgewicht.

Es wurden zwei Polyester mit unterschiedlichen Molekulargewichten hergestellt. Die analytischen Daten der Ester vor und nach der Kurzwegdestillation sind in der folgenden Tabelle zusammengefasst.

| **Vor Destillation:** | | | | | **Nach Destillation:** | | | |
|---|---|---|---|---|---|---|---|---|
| **Bsp.** | **SZ** | **OHZ** | **Mn** | **fr. Gly** | **SZ** | **OHZ** | **Mn** | **fr. Gly** |
| 1a | 0,6 | 64,2 | 1750 | 0,4 | 0,5 | 56,7 | 1980 | <0,02 |
| 2a | 0,9 | 54,5 | 2060 | 0,2 | 0,98 | 49,0 | 2290 | <0,02 |
| SZ = Säurezahl (mg KOH/g), OH = Hydroxylzahl (mg KOH/g), Mn = numerische Molgewicht, fr. Gly = freies Glykol in Gew.-%. | | | | | | | | |

### Vergleichsbeispiel (handelsüblicher Polyester ohne Destillation der kurzkettigen Anteile)

Desmophen® 2000 MZ: SZ: 0,9 OHZ: 56 Mn: 2000 Fr. Gly: 0,2
Desmophen® 2000 MZ ist ein Polyester aus Adipinsäure und Ethylenglykol (Handesprodukt der Bayer AG)

### 1.2 Herstellung von monomerenarmen Polyester-TDI Präpolymeren:

Zur Herstellung der monomerenarmen Polyester-TDI-Präpolymere wurden die nach 1.1 erhaltenen Polyester im Molverhältnis 1 zu 8 mit TDI 80 (= Isomergemisch aus 80% 2.4- und 20% 2.6-TDI) umgesetzt und anschließend in einem Kurzwegverdampfer von dem überschüssigen TDI befreit.

Die Präpolymere hatten folgende analytische Daten:

| **Bsp.** | **PE*** | **NCO** | **fr. TDI** | **NCO** | **Visk.** |
|---|---|---|---|---|---|
| | | (theor.) | | (gefunden.) | (70°C) |
| | | (%) | (% n. GC) | (%) | (mPas) |
| 1b | 1a | 3,6 | <0,03 | 3,5 | 3150 |
| 2b | 2a | 3,2 | <0,03 | 3,2 | 4540 |

| | | | | | |
|---|---|---|---|---|---|
| % Angaben in Gew.-% *PE = Polyester aus Beispiel 1.1 nach Destillation | | | | | |

### Vergleich:

Zum Vergleich wurde ein Präpolymer analog 1.2 aus dem handelsüblichen Polyester Desmophen® 2000MZ der Fa. Bayer AG hergestellt mit nachfolgenden analytischen Daten:

| NCO | fr. TDI | NCO | Visk. |
|---|---|---|---|
| (theor.) | | (gefunden) | (mPas) |
| (%) | (% bestimmt mit GC) | (%) | (mPas) |
| 3,65 | 0,16 | 3,4 | 3380 |
| %-Angaben in Gew.-% | | | |

### 1.3. Herstellung von Elastomeren mit den in 1.2 beschriebenen Prepolymeren:

Die in 1.2 erwähnten Prepolymere wurden in der üblichen Weise bei 100°C mit dem Vernetzer Isobutylester der 4 Chloro-3,5-diaminobenzoesäure zu Elastomeren umgesetzt und in Formen ( 20 x 20 x 2 (6, 12.5) mm) vergossen. Die Gießlinge wurden 24 Stunden bei 110°C nachgetempert und nach 14 Tagen die in der nachfolgenden Tabelle aufgelisteten Eigenschaften gemessen.

**Tabelle:**

| **Prepolymer** | **1b** | **2b** | **Vergleich** | **gemessen nach** **DIN** |
|---|---|---|---|---|
| Stoichiometrisches Verhältnis von Prepolymeren zu Vernetzer | 1,1:1 | 1,1:1 | 1,1:1 | |
| Shore Härte A/D | 92/32 | 90/30 | 91/32 | 53505 |
| Reißspannung (Mpa) | 50 | 49 | 40 | 53504 |
| Stoßelastizität (%) | 41 | 45 | 40 | 53512 |
| Weiterreißwiderstand (kN/m) | 49 | 45 | 45 | 53515 |
| Abriebverlust (mm³) | 46 | 43 | 40 | 53516 |

### Ergebnis:

Anhand der Tabelle für die Präpolymeren sieht man, dass handelsübliche Produkte einen deutlich höheren Gehalt an fr. TDI aufweisen im Vergleich zu den erfindungsgemäßen Produkten, bei den fr. TDI mit den verwendeten Methoden unterhalb der Meßgrenze liegen.

Aus der Tabelle für Elastomeren erkennt man, dass die mechanischen Eigenschaften der Elastomere durch die erfindungsgemäße Vorbehandlung der Polyester nicht beeinflusst werden.

## Patentansprüche

1. Verfahren zur Herstellung von Isocyanatendgruppen enthaltenden Prepolymeren, **dadurch gekennzeichnet, dass** man Polyisocyanate im Überschuss mit mindestens zwei Hydroxygruppen aufweisenden Polyestern vom Molekulargewicht 400 bis 5000 umsetzt, wobei die eingesetzten Polyester einen Gehalt an den den Polyestem zugrundeliegenden Polyolen von ≤ 6 mol-%, bezogen auf die Molverteilung des Polyesters, besitzen, und anschließend das Reaktionsgemisch einer Destillation, gegebenenfalls unter Zugabe eines Schleppmittels, unterwirft.

2. Verfahren nach Anspruch 1, **dadurch gekennzeichnet, dass** man Polyester einsetzt, die einen Gehalt an den den Polyester zugrundeliegenden Polyolen von ≤ 3 mol-% besitzen.

3. Verfahren nach Anspruch 1, **dadurch gekennzeichnet, dass** man Polyester einsetzt, die einen Gehalt an den den Polyester zugrundeliegenden Polyolen von ≤ 1,5 mol-% besitzen.

4. Verfahren nach Anspruch 1, **dadurch gekennzeichnet, dass** man die Polyisocyanate und die Polyester im Mengenverhältnis von mindestens 1,9:1 einsetzt.

5. Verwendung der nach Anspruch 1 hergestellten Prepolymeren zu Herstellung von PU-Gießelastomeren.

## Claims

1. A process for producing prepolymers which contain isocyanate terminal groups, **characterised in that** polyisocyanates in excess are reacted with polyesters of molecular weight 400 to 5000 which contain at least two hydroxy groups, wherein the polyesters used have a content of polyols on which the polyesters are based of ≤ 6 mol % with respect to the molar distribution of the polyester, and the reaction mixture is subsequently subjected to distillation, optionally with the addition of an entraining agent.

2. A process according to claim 1, **characterised in that** polyesters are used which have a content of polyols on which the polyesters are based of ≤ 3 mol %.

3. A process according to claim 1, **characterised in that** polyesters are used which have a content of polyols on which the polyesters are based of ≤ 1.5 mol %.

4. A process according to claim 1, **characterised in that** the polyisocyanates and polyesters are used in a quantitative ratio of at least 1.9:1.

5. Use of prepolymers produced according to claim 1 for the production of cast PU elastomers.

## Revendications

1. Procédé de fabrication de prépolymères contenant des groupes terminaux isocyanate, **caractérisé en ce qu'**on fait réagir le polyisocyanate en excès avec des polyesters présentant au moins deux groupes hydroxyle, de poids moléculaire de 400 à 5000, les polyesters utilisés possédant une teneur en polyalcools à la base des polyesters de ≤ 6 mol %, par rapport à la distribution molaire du polyester, et qu'on soumet ensuite le mélange réactionnel à une distillation, éventuellement avec addition d'un entraîneur.

2. Procédé selon la revendication 1, **caractérisé en ce qu'**on utilise des polyesters qui possèdent une teneur en polyalcools à la base des polyesters de ≤ 3 mol %.

3. Procédé selon la revendication 1, **caractérisé en ce qu'**on utilise des polyesters qui possèdent une teneur en polyalcools à la base des polyesters de ≤ 1,5 mol %.

4. Procédé selon la revendication 1, **caractérisé en ce qu'**on utilise les polyisocyanates et les polyesters dans une proportion d'au moins 1,9/1.

5. Mise en oeuvre des prépolymères fabriqués selon la revendication 1 pour la fabrication d'élastomères coulés PU.
